# EUROPÄISCHE PATENTANMELDUNG

(11) **EP 1 315 197 A1**
(43) Veröffentlichungstag der Anmeldung: **28.05.2003**
(21) Anmeldenummer: 02102650.5
(22) Anmeldetag: 26.11.2002
(51) Int. Cl.: H01J 61/33, H01J 61/82, H01J 61/28

(54) **Hochdruckgasentladungslampe**

(30) Priorität: 26.11.2001 DE 10157621; 21.12.2001 DE 10163584
(71) Anmelder: Philips Intellectual Property & Standards GmbH, 20099 Hamburg (DE); Koninklijke Philips Electronics N.V., 5621 BA Eindhoven (NL)
(72) Erfinder: Haacke, Michael, Dr., 52088 Aachen (DE); Postma, Pieter, 52088 Aachen (DE); Hellwig, Paul, 52088 Aachen (DE); Schöneich, Jürgen, 52088 Aachen (DE); Muckel, Ralf, 52088 Aachen (DE)
(74) Vertreter: Volmer, Georg, Dipl.-Ing.

(57) **Zusammenfassung**

Es wird eine Hochdruckgasentladungslampe (HID- [high intensity discharge]-Lampe) beschrieben, die insbesondere quecksilberfrei und zur Anwendung in der Automobiltechnik vorgesehen ist. Zur Erzielung von verbesserten Lampeneigenschaften, insbesondere einer im wesentlichen gleichen Lichteffizienz wie bei Lampen mit gleicher Leistung und einer quecksilberhaltigen Gasfüllung, sowie einer möglichst hohen Brennspannung, wird eine Geometrie des Entladungsraums (2) vorgeschlagen, durch die die Temperatur der kältesten Stelle der Lampe so weit erhöht wird, dass auch ohne Quecksilber und insbesondere bei Anwendung eines Metall-Halogenids als Spannungsgradientenbildner die Lichtbildner-Substanzen in ausreichendem Maße in die Gasphase übergehen können.

## Beschreibung

Die Erfindung betrifft eine Hochdruckgasentladungslampe (HID- [high intensity discharge]-Lampe), die insbesondere quecksilberfrei und zur Anwendung in der Automobiltechnik geeignet ist.

Herkömmliche Hochdruckgasentladungslampen enthalten einerseits ein Entladungsgas (im allgsmeinen ein Metall-Halogsnid wie Natriumiodid oder Scandiumiodid), das das eigentliche Licht-emittierende Material (Lichtbildner) darstellt, sowie andererseits Quecksilber, das in erster Linie als Spannungsgradientenbildner dient und im wesentlichen die Funktion hat, die Effizienz und die Brennspannung der Lampe zu erhöhen.

Lampen dieser Art haben auf Grund ihrer guten Eigenschaften eine weite Verbreitung gefunden, und sie werden in zunehmendem Maße auch in der Automobiltechnik eingesetzt. Insbesondere für diese Anwendung wird zum Teil jedoch auch gefordert, dass die Lampen aus Gründen des Umweltschutzes kein Quecksilber enthalten.

In der EP 1 063 681 wird eine Entladungslampe beschrieben, bei der zur Vermeidung von Umweltverschmutzungen und zur Verminderung des ultravioletten Strahlungsanteils auf die Anwendung von Quecksilber in dem Entladungsraum verzichtet wird Weiterhin wird dort beschrieben, dass solche Lampen jedoch in Fahrzeugen nicht verwendet werden können, da sie nach dem Einschalten nicht schnell genug den geforderten Lichtstrom erzeugen. Dieses Problem soll dadurch gelöst werden, dass die Wärmekapazität und der Wärmeverlust des Entladungsraums vermindert wird und dass bestimmte Verhältnisse zwischen einerseits dem Gas-Innendruck bei Zimmertemperatur und andererseits dem Volumen des Entladungsraums sowie dessen maximaler Wanddicke bzw. verschiedener Querschnittsflächen in dem Entladungsraum eingehalten werden.

Nachteilig hierbei ist jedoch, dass durch einen verminderten Abstand zwischen der Gefäßinnenwand und dem durch Konvektion nach oben gebogenen Lichtbogen die Lichtbildner-Substanzen mit dem Siliziumoxid insbesondere in dem relativ heißen oberen Wandbereich des Entladungsgefäßes reagieren und zu einer verstärkten Kristallisation rühren, durch die die Lebensdauer der Lampe verkürzt wird. Außerdem weist eine solche Lampe im Vergleich zu einer Quecksilber enthaltenden Lampe eine geringere Effizienz auf.

Neben der geringeren Effizienz besteht ein weiteres allgsmeines Problem bei quecksilberfreien Lampen darin, dass sich bei gleicher Lampenleistung im Dauerbetrieb eine niedrigere Brennspannung und somit ein höherer Lampenstrom ergibt.

Schließlich ist insbesondere für die Anwendung in der Automobiltechnik die Einbausituation und das Zusammenwirken mit dem Reflektor zu berücksichtigen, so dass die äußere Form der Lampe im wesentlichen unverändert bleiben sollte.

Eine Aufgabe, die der Erfindung zugrunde liegt, besteht deshalb darin, eine Hochdruckgasentladungslampe zu schaffen, mit der im Falle einer quecksilberfreien Gasfüllung eine Effizienz erreicht werden kann, die im wesentlichen derjenigen von quecksilberhaltigen Lampen entspricht, bzw. deren Effizienz bei quecksilberhaltiger Gasfüllung water gesteigert werden kann.

Weiterhin soll eine Hochdruckgasentladungslampe geschaffen werden, die eine auch bei einer quecksilberfreien Gasfüllung höhere Brennspannung aufweist, als sie im allgemeinen mit quecksilberfreien Lampen erreichbar ist.

Insbesondere soll eine Hochdruckgasentladungslampe geschaffen werden, mit der mindestens eines der beiden zuvor genannten Ziele (höhere Effizienz bzw. höhere Brennspannung) erreicht werden kann, ohne dass es erforderlich ist, die Leistung der Lampe oder deren maximale thermische Belastung zu erhöhen oder die äußeren Abmessungen des Lampen-Außenkolbens zu vergrößern.

Es soll auch eine quecksilberfreie Hochdruckgasentladungslampe geschaffen werden, die eine für Fahrzeuganwendungen übliche Lumen-Maintenance aufweist, d. h. bei der der Abfall der Lichtstroms während der Lebensdauer ähnlich wie bei quecksilberhaltigen Lampen verläuft. Schließlich soll eine insbesondere zur Anwendung in der Automobiltechnik geeignete Hochdruckgasentladungslampe geschaffen werden.

Gelöst wird die Aufgabe gemäß Anspruch 1 mit einer Hochdruckgasentladungslampe mit einem Entladungsgefäß, das einen Entladungsraum mit einer Lichtbildner-Substanz und mit einer in der Betriebsstellung der Lampe unteren Bodenfläche umschließt, die einen eisten erhöhten Bereich sowie mindestens einen zweiten Bereich aufweist, wobei der Abstand des ersten Bereiches von einer im Betrieb der Lampe ausgebildeten Bogenentladung so bemessen ist, dass die auf dem ersten Bereich angesammelte Lichtbildner-Substanz nach dem Einschalten der Lampe durch Erwärmung in ausreichender Menge in den gasförmigen Zustand übergeht, und wobei der zweite Bereich in der Weise gestaltet ist, dass er als Sammelbereich für die durch die beim Einschalten der Lampe bewirkte Erwärmung wandernde Lichtbildner-Substanz wirkt. Ein solches Sammelbecken ist aus mehreren Gründen vorteilhaft. Zum einen wird dadurch zumindest teilweise verhindert, dass wandernde Lichtbildner-Substanzen in den Bereich der Eintrittsstellen der Elektroden eindringen. Zum anderen sorgt ein solches Sammelbecken dafür, dass die Salzschmelzen weitgehend vom ersten Bereich verschwinden, wo sie die Lichtauskopplung aus der Lampe durch Reflektion und Absorption erschweren würden.

Der zweite Bereich kann dabei so gestaltet sein, dass er gegenüber dem ersten Bereich abgesenkt oder angähoben ist oder - sofern er eine entsprechend große Fläche aufweist - den ersten Bereich im wesentlichen eben fortsetzt. Diese Gestaltung ist in erster Linie in Abhängigkeit von der Art und der Mengs der in das Entladungsgefäß eingsbrachten Lichtbildner-Substanz, d h deren Verdampfungs- bzw. Wanderungseigenschaften festzulegen.

Ein besonderer Vorteil dieser Lösung besteht darin, dass durch diese Geometrie des Entladungsraums die Temperatur der kältesten Bereiche in dem Entladungsraum angshoben werden kann, ohne dass dadurch die maximale Temperatur (an der in der Betriebsstellung oberen Seite) und die maximale thermische Belastung der Lampe ansteigt oder Lichtbildner-Substanzen in die Quetschungen wandern und dort Schäden verursachen können.

Dies hat u.a. zur Folge, dass entweder auf Quecksilber ersatzlos verzichtet werden kann, oder dass anstelle von Quecksilber ein anderer, weniger umweltbelastender Spannungsgradientenbildner, zum Beispiel ein geeignetes Metall-Halogenid verwendet werden kann, wobei in allen Fällen die Lichtbildner-Substanzen aufgrund der mit dieser Geometrie erzielten höheren Temperatur der kältesten Bereiche in ausreichender Menge in die Gasphase gelangen und sich dadurch die Effizienz der Lampe und deren Brennspannung weiter erhöht. Dies kann auch durch Einbringen eines Edelgases (insbesondere Xenon) erreicht werden, mit dem der Gasdruck in dem Entladungsraum erhöht wird.

An dieser Stelle sei erwähnt, dass aus der US-PS 5,211,595 ein Verfahren zur Herstellung einer Entladungslampe mit asymmetrischen Quetschungen und einem asymmetrischen Entladungsgefäß bekannt ist. Mit dieser Asymmetrie soll im Gegensatz zur erfindungsgemäßen Lösung eine größere Beabstandung des oberen Bereiches des Entladungsgefäßes von dem sich im Betrieb relativ stark nach oben krümmenden Lichtbogen erreicht werden, so dass sich dieser Bereich nicht so stark erwärmt. Weiterhin sollen bei der Herstellung eines Entladungsgefäßes mit einer solchen Asymmetrie und einer nur geringen Krümmung im unteren Wandbereich dort Risse vermieden werden, in denen sich verstärkt Metall-Halogenide sammeln würden, und es soll eine größere Oberfläche geschaffen werden, um die Verdampfung dieser Substanzen zu erleichtern und die photometrischen Eigenschaften der Lampe zu verbessern. Schließlich ist diese Lampe weder quecksilberfrei, noch zur Anwendung in der Automobiltechnik vorgesehen, so dass diese Druckschrift nicht als einschlägig angesehen wird

Die Unteransprüche haben vorteilhafte Weiterbildungen der Erfindung zum Inhalt.

Die Ausführungen gemäß den Ansprüchen 2 und 3 haben insbesondere den Vorteil, dass die Herstellung besonders einfach und somit kostengünstig ist.

Die Ausführung gemäß Anspruch 4 bietet sich insbesondere für die Anwendung in Fahrzeug-Scheinwerfern an.

Die Ansprüche 5 und 6 beinhalten bevorzugt anstelle von Quecksilber zu verwendende Spannungsgradientenbildner, mit denen eine besonders gute Lampeneffizienz erzielt werden kann, während Anspruch 7 eine alternative Möglichkeit zur Erreichung dieses Ziels und insbesondere einer höheren Effizienz und Brennspannung beschreibt.

Mit der Ausführung gemäß Anspruch 8 wird eine besonders gleichmäßigs Temperaturerhöhung der Bodenfläche erzielt, wahrend gemäß Anspruch 9 der Schutz der Eintrittsstellen der Elektroden und der dahinter liegsnden Quetschungen vor den Lichtbildner-Substanzen weiter verbessert werden kann.

Weitere Einzelheiten, Merkmale und Vorteile der Erfindung ergsben sich aus der folgenden Beschreibung von bevorzugten Ausrührungsformen anhand der Zeichnung Es zeigt:
Fig. 1 eine schematische Darstellung einer ersten Ausführungsform der Erfindung
Fig. 2 eine schematische Darstellung einer zweiten Ausführungsform der Erfindung
Fig. 3 eine schematische Darstellung einer dritten Ausführungsform der Erfindung
Fig. 4 eine schematische Darstellung einer vierten Ausführungsform der Erfindung
Fig. 5 eine schematische Darstellung einer fünften Ausführungsform der Erfindung und
Fig. 6 eine schematische Darstellung einer erfindungsgemäßen Entladungslampe mit einem Außenkolben.

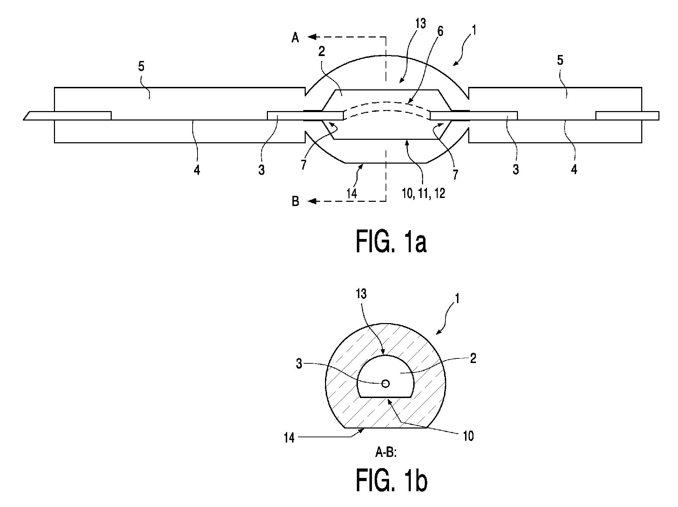

Figur 1 zeigt schematisch den Aufbau einer ersten erfindungsgemäßen Hochdruckgasentladungslampe. Die Lampe umfasst gemäß Figur 1(a) ein Entladungsgefäß 1 aus Quarzglas, das einen Entladungsraum 2 umschließt. Der Entladungsraum 2 wird u. a. von einer im Betriebszustand der Lampe unteren Bodenfläche 10 sowie einer dieser gegenüberliegenden oberen Wand 13 begrenzt.

Der Entladungsraum ist mit einem Gas gefüllt, das sich aus dem die Lichtstrahlung durch Anregungen bzw. Entladung emittierenden Entladungsgas (Lichtbildner) sowie vorzugsweise einem Spannungsgradientenbildner zusammensetzt, die beide aus der Gruppe der Metall-Halogenide gewählt werden können.

Bei den Lichtbildner-Substanzen handelt es sich zum Beispiel um Natriumiodid und /oder Scandiumiodid, während als Spannungsgradientenbildner anstelle von Quecksilber zum Beispiel Zinklodid und /oder andere Substanzen verwendet werden können.

Alternativ oder zusätzlich zu dem Spannungsgradientenbildner können bestimmte Mengen von Edelgasen (zum Beispiel Xenon) in den Entladungsraum 2 eingebracht werden, um den Gasdruck und damit die Effizienz und die Brennspannung zu erhöhen.

In den Entladungsraum 2 erstrecken sich von seinen gegenüberliegenden Seiten die freien Enden von Elektroden 3, die aus einem Material mit möglichst hoher Schmelztemperatur wie zum Beispiel Wolfram hergestellt sind. Die jeweils anderen Enden der Elektroden 3 sind jeweils an einem elektrisch leitenden Band oder einer Folie 4, insbesondere einem Molybdänband befestigt, über das wiederum eine elektrische Verbindung zwischen den Anschlüssen der Entladungslampe und den Elektroden 3 hergestellt wird

Um einen vakuumdichten Abschluss der Eintrittsstellen 7 der Elektroden 3 in den Entladungsraum 2 zu gewährleisten, setzt sich das Entladungsgefäß 1 in diesen Bereichen jeweils in Form von Quarzglas-Abschnitten (Quetschungen) 5 fort, in die die den freien Enden der Elektroden 3 gegenüberliegenden Abschnitte sowie das elektrisch leitende Band 4 eingebettet sind

Die Quetschungen 5 sind dabei vorzugsweise symmetrisch zu dem Entladungsgefäß 1 angeordnet bzw. liegen auf dessen Längsachse. Dies hat den Vorteil, dass die Außenabmessungen des Außenkolbens der erfindungsgemäßen Lampe nicht verändert werden müssen, was insbesondere für die Anwendung dieser Lampen in Fahrzeug-Scheinwerfern von besonderer Bedeutung ist. Außerdem ist die Herstellung einer Lampe mit symmetrischen Quetschungen einfacher und somit kostengünstiger.

Im Betriebszustand der Lampe wird zwischen den Spitzen der Elektroden 3 eine Bogenentladung 6 (Lichtbogen) angeregt.

Figur 1(b) zeigt einen Querschnitt entlang der Linie A-B in Figur 1(a). In dieser Darstellung ist wiederum das Entladungsgefäß 1 sowie der Entladungsraum 2 mit den Elektroden 3, der Bodenfläche 10 sowie der oberen Wand 13 zu erkennen. Weiterhin geht aus dieser Darstellung hervor, dass das Entladungsgefäß 1 in dem der Bodenfläche 10 gegenüberliegenden Bereich eine äußere Abflachung 14 aufweist, die im wesentlichen dazu beiträgt, die spezifische Wärmekapazität dieses Bereiches des Entladungsgefäßes zu begrenzen, damit möglichst wenig Wärme aus der Bodenfläche 10 abgsführt wird

Wie bereits eingangs erwähnt wurde, enthält die Gasfüllung der erfindungsgemäßen Hochdruckgasentladungslampen als Spannungsgradientenbildner anstelle von Quecksilber vorzugsweise ein oder mehrere geeignete Metall-Halogenide. Da diese Substanzen jedoch einen relativ geringen Partialdampfdruck aufweisen, ist es erforderlich, zur Erzielung einer im Vergleich zur Anwendung von Quecksilber im wesentlichen gleichen Lampeneffizienz (Lichtstrom) sowie einer möglichst hohen Brennspannung den Temperaturhaushalt in dem Entladungsgefäß 1 zu beeinflussen und insbesondere die Temperatur des kältesten Bereiches, das heißt der Bodenfläche 10 anzuheben, so dass im Betriebszustand der Lampe eine ausreichende Menge der Lichtbildner-Substanzen, die sich bei abgeschalteter Lampe in fester Form auf der Bodenfläche 10 ansammeln, in dem Entladungsraum 2 in den gasförmigen Zustand übergeht.

Allerdings ist dabei natürlich auch zu beachten, dass die höchste Temperatur, die sich an der oberen Wand 13 des Entladungsraums 2 aufbaut, nicht so hoch werden darf, dass eine Kristallisation oder Entglasung des aus Quarzglas gefertigten Entladungsgefäßes 1 auftritt. Dies kann deshalb problematisch sein, weil durch die starke Konvektion innerhalb des Entladungsraums der Bereich oberhalb der Bogenentladung 6 besonders stark erwärmt wird

Mit der in den Figuren 1(a), (b) gezeigten Ausgestaltung des Entladungsraums 2 werden diese Voraussetzungen bzw Forderungen erfüllt. Wie in den Darstellungen zu erkennen ist, hat die Bodenfläche 10 einen relativ geringen Abstand von dem sich im Betrieb ausbildenden Lichtbogen 6. Dieser Abstand sollte dabei vorzugsweise kleiner sein, als der Abstand zwischen dem Lichtbogen 6 und dem Bereich der oberen Wand 13 des Entladungsraums 2. Der Abstand von der Bodenfläche muss jedoch mindestens so groß sein, dass die Elektroden 3 und der sich zwischen diesen ausbildende Lichtbogen 6 einschließlich seines Diffusbereiches nicht behindert bzw. gestört werden.

Die Größe und Form der Bodenfläche 10 wird weiterhin so gewählt, dass sich einerseits die Lichtbildner-Substanz bei ausgeschalteter Lampe zu einem großen Teil auf dieser Bodenfläche 10 ansammelt. Andererseits wird insbesondere die Annäherung der Bodenfläche an den Bereich zwischen den Elektrodenspitzen in Abhängigkeit von der Art und Menge der Lichtbildner-Substanz so gewählt, dass diese mit der Inbetriebnahme der Lampe durch die Bogenentladung 6 ausreichend stark erwärmt wird, so dass sie in ausreichender Menge in den gasförmigen Zustand übergäht und dadurch die Effizienz der Lampe erhöht. Bei der Bemessung des Bodenfläche 10 ist auch darauf zu achten, dass die zunächst entstehende Schmelze der Lichtbildner-Substanz nicht die Elektrodenspitzen oder die Bogenentladung 6 bedeckt.

Mit der so bemessenen und gestalteten Bodenfläche 10 kann insbesondere eine Lampen-Effizienz erreicht werden, wie sie bisher im wesentlichen nur mit Quecksilber enthaltendenden Gasfüllungen erzielt werden konnte. Weiterhin entsprechen auch die spektralen Eigenschaften und der Farbort des erzeugten Lichtes weitgehend derjenigen von quecksilberhaltigen Lampen, was insbesondere für die Anwendung in der Automobiltechnik von besonderer Bedeutung ist.

Auch die Brennspannung der Lampe wird dadurch im Vergleich zu bekannten quecksilberfreien Lampen wesentlich erhöht (und könnte durch eine Vergrößerung des Elektrodenabstandes und andere Maßnahmen weiter erhöht werden).

Durch die in der beschriebenen Weise erhöhte Bodenfläche 10 wird die Temperatur der wärmsten Stelle des Entladungsgefäßes 1, die sich im allgemeinen gegenüberliegend an der oberen Wand 13 befindet, nicht weiter erhöht, so dass sich auch die maximale thermische Belastung der Lampe nicht vergrößert und insbesondere eine den quecksilberhaltigen Entladungslampen vergleichbare Lumen-Maintenance erzielt wird.

Durch die Erhöhung der Temperatur nur der Bodenfläche 10 wird auch erreicht, dass das Temperaturgsfälle in der Wand des Entladungsgsfäßes 1, insbesondere zwischen dessen Ober- und Unterseite, vermindert wird, so dass auch die thermischen Spannungen in dem Gefäß wesentlich geringer sind.

Eine weitere, mit der Gestaltung der Bodenfläche 10 zu erfüllende Vorgabe besteht darin, dass die auf der Bodenfläche 10 angesammelten Lichtbildner-Substanzen (oder andere abgeschiedene Substanzen) beim Einschalten der Lampe durch die eintretende Temperaturerhöhung und die dadurch bewirkte Wanderung dieser Substanzen weitgehend vom dem Bereich der Bodenfläche 10, der unterhalb der Elektrodenspitzen und unterhalb der Bogenentladung 6 liegt, verschwinden, wo sie die Lichtauskopplung aus der Lampe durch Reflektion und Absorption erschweren würden. Andererseits ist bei der Gestaltung der Bodenfläche 10 allerdings auch darauf zu achten, dass die wandernden und nicht in der Gasphase befindlichen Lichtbildner-Substanzen zumindest nicht in wssentlicher Menge an die Eintrittsstellen 7 der Elektroden 3 und damit in die Quetschungen 5 gelangen können, da sie dort mit der Zeit Schäden durch Korrosion oder ähnliches verursachen können.

Dies wird bei der ersten Ausführungsform im wesentlichen durch geeignete Abstimmung zwischen der Menge der Lichtbildner-Substanz und der Größe der Bodenfläche 10 und bei der zweiten und dritten Ausführungsform der Erfindung durch die im folgenden beschriebenen Maßnahmen verhindert.

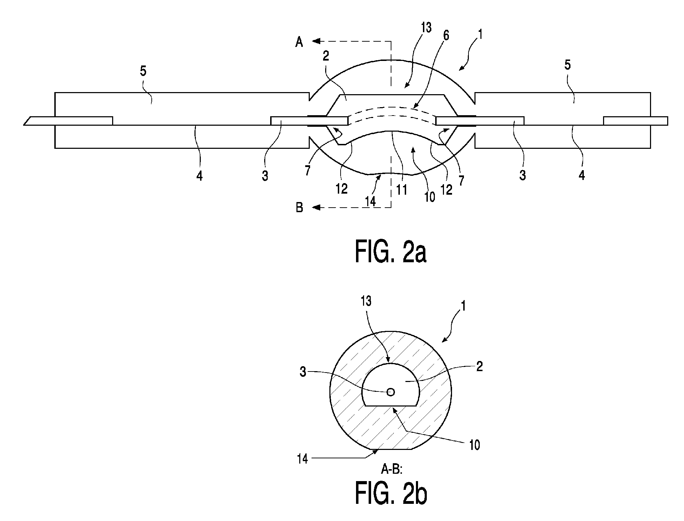

Die Figuren 2(a) und 2(b) zeigen die zweite Ausführungsform, bei der gleiche Teile wie in den Figuren 1(a) und (b) mit gleichen Bezugsziffern bezeichnet sind, so dass insoweit auf eine erneute Beschreibung verzichtet werden kann. Im Unterschied zu der ersten Ausführungsform weist die Bodenfläche 10 hier einen ersten, erhöhten Bereich 11 auf, der in Richtung auf die Eintrittsstellen 7 der Elektroden 3 in jeweils einen zweiten Bereich 12 übergeht.

Die Fläche und die Höhe des ersten Bereiches 11, mit der sich dieser an den Lichtbogen 6 annähert, wird dabei im wesentlichen in Abhängigkeit von der Art der Lichtbildner-Substanz so bemessen, dass die auf dem ersten Bereich in abgsschaltetem Zustand der Lampe angesammelte Lichtbildner-Substanz nach dem Einschalten der Lampe durch Erwärmung zumindest weitgehend in den gasförmigen Zustand übergeht und auch in für den Lampenbetrieb ausreichender Menge im Gaszustand verbleibt. Dieses Verschwinden der Lichtbildner-Substanz vom Bereich 11 ermöglicht eine weitgehend ungehinderte Lichtauskopplung aus der Lampe auch durch den Bereich 11.

Die zweiten Bereiche 12 sind in dem Maße gegenüber dem ersten Bereich 11 abgesenkt, wie es in Abhängigkeit von der Bemessung des ersten Bereiches 11 sowie der Menge der sich in abgeschaltetem Zustand der Lampe auf der unteren Bodenfläche 10 ansammelnden Lichtbildner-Substanz erforderlich ist, um dafür zu sorgen, dass die zweiten Bereiche 12 als Sammelbecken für die Teile der Lichtbildner-Substanzen dienen, die im Betrieb der Hochdruckentladungslampe nicht in der Gasphase sind, sondern als Salzschmelze vorliegen. Je nach Befüllung der Lampe mit Lichtbildner-Substanzen können nämlich durchaus auch größere Mengen der Lichtbildner-Substanz, z B. 80% der Füllmenge, im Lampenbetrieb als Schmelze vorliegen. Daher haben die zweiten Bereiche 12 einerseits den Effekt, die im Lampenbetrieb als Schmelze vorliegenden Lichtbildner-Substanz vom ersten Bereich 11 fernzuhalten, wo sie ansonsten die Lichtauskopplung aus der Lampe behindern würde. Andererseits verhindern sie jedoch auch mindestens zum Teil, dass die beim Einschalten der Lampe durch die dadurch bewirkte Erwärmung und Wanderung der Lichtbildner-Substanz in Richtung auf die Eintrittsstellen 7 der Elektroden 3 an diese Eintrittsstellen 7 gelangen kann.

Die gegenüber dem ersten Bereich 11 tiefsten Abschnitte der zweiten Bereiche 12 liegen unter den Spitzen der Elektroden 3 und dienen somit zur Aufnahme der in Richtung auf die Eintrittsstellen 7 gewanderten Substanzmengen, so dass die Eintrittsstellen 7 zumindest teilweise vor diesen Substanzen geschützt bleiben. Insgesamt wird jedoch auch in diesem Fall die Temperatur der kältesten Stelle erhöht.

Schließlich ist in Figur 2(a) auch zu erkennen, dass die Form der äußeren Abflachung 14 des Entladungsgefäßes 1 in dessen Längsrichtung dem Verlauf der Bodenfläche 10 des Entladungsraums 2 folgt.

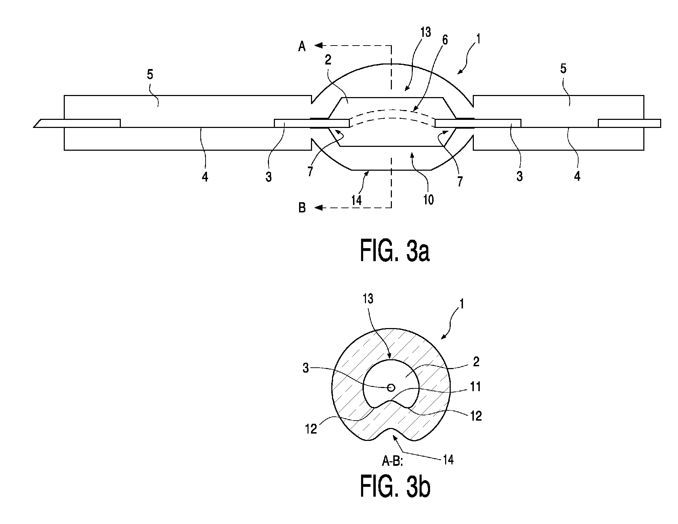

Die Figuren 3(a), (b) zeigen die dritte Ausführungsform der Erfindung. Auch in dieser Darstellung sind gleiche bzw. einander entsprechende Teile wie in den Figuren 1 und 2 jeweils mit gleichen Bezugszeichen versehen, so dass insoweit auf eine erneute Beschreibung verzichtet werden kann

Im Unterschied zu der zweiten Ausrührungsform, gemäß den Figuren 2(a) und (b) weist die Bodenfläche 10 hier eine Symmetrie zur Längsachse des Entladungsgefäß 1 auf. Dies wird insbesondere in der Querschnittsdarstellung gemäß Figur 3(b) deutlich, wonach der erste erhöhte Bereich 11 in Längsrichtung des Entladungsgefäßes 1 unterhalb den Elektroden 3 und einer zwischen ihnen gedachten Verbindungslinie verläuft. Die beiden zweiten Bereiche 12 verlaufen parallel zu dem ersten Bereich 11 und liegen an beiden Seiten dieses Bereiches 11.

Auch mit dieser Gestaltung der Bodenfläche 10 wird zumindest teilweise verhindert, dass die beim Einschalten der Lampe in Richtung auf die Elektroden 3 wandernden Lichtbildner-Substanzen in die Eintrittsstellen 7 gelangen, da sie bei der Wanderung im wesentlichen in die zweiten Bereiche 12 hinabgleiten, wo sie dann während des Lampenbetriebes verbleiben und somit den ersten Bereich 11 frei von ihren Schmelzen halten.

Auch bei dieser Ausführungsform, folgt die Form der äußeren Abflachung 14 des Entladungsgefäßes 1 dem Verlauf der Bodenfläche 10 des Entladungsraums 2.

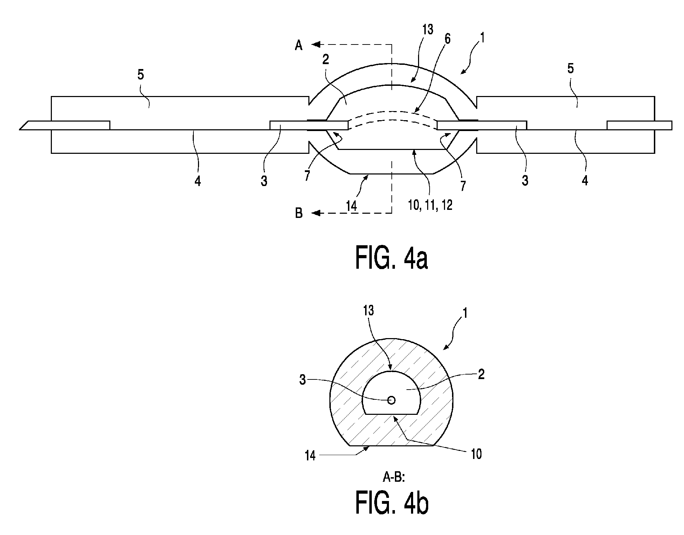

Die Figuren 4(a) und (b) zeigen die vierte Ausführungsform der Erfindung wobei in diesen Darstellungen wiederum gleiche bzw. einander entsprechende Teile wie in den Figuren 1 bis 3 jeweils mit gleichen Bezugszeichen versehen sind, so dass insoweit eine erneute Beschreibung nicht erforderlich ist.

Im Unterschied zu der ersten bis dritten Ausführungsform hat hierbei die obere Wand 13 eine in Längsrichtung des Entladungsgefäßes 1 verlaufende und nach oben gerichtete Krümmung, die im wesentlichen dem im allgemeinen etwas nach oben gekrümmten Verlauf der Bogenentladung 6 folgt. Damit wird erreicht, dass sich die obere Wand 13 weniger stark erwärmt. Die Gestaltung der Bodenfläche 10 ist davon unabhängig und kann entsprechend den Darstellungen in den Figuren 1 bis 3 vorgsnommen werden.

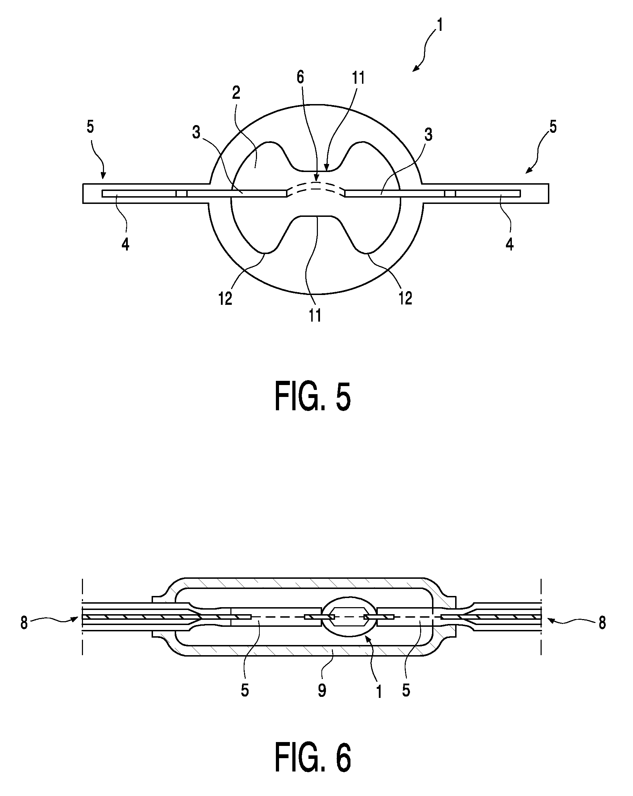

Figur 5 zeigt eine fünfte Ausführungsform der Erfindung, wobei in dieser Darstellung gleiche bzw. einander entsprechende Teile wie in den Figuren 1 und 2 jeweils mit gleichen Bezugszeichen versehen sind, so dass insoweit eine erneute Beschreibung nicht erforderlich ist. Im Unterschied zu den in den Figuren 1 und 2 dargestellten Entladungslampen ist hierbei das Entladungsgefäß 1 rotationssymmetrisch um seine Längsachse ausgsbildet. Dies bedeutet, dass sich die Bodenfläche 10 über den gesamten Innenumfang des Entladungsraums 2 erstreckt, so dass auch die obere Wand 13 (spiegelsymmetrisch) die gleiche Form aufweist, wie die Bodenfläche 10.

Diese Gestaltung, die auf alle Ausführungsformen gemäß den Figuren 1 und 2 angewendet werden kann, hat im wesentlichen fertigungstechnische Vorteile und ist einfacher und somit kostengünstiger herstellbar. Eine damit verbundene stärkere Erwärmung des in der Betriebsstellung oberen Bereiches des Entladungsgefäßes 1 kann insbesondere dann in Kauf vorgenommen werden, wenn die Lampe z B. für eine relativ geringe Leistung vorgesehen ist oder in dem oberen Bereich gekühlt wird.

Darüber hinaus sind die Wirkungsweise und die Vorteile dieser Ausführung die gleichen, wie sie oben im Zusammenhang mit den anderen Ausführungsformen beschrieben wurden.

Bei allen Ausführungsformen kann mit einer zusätzlichen Beschichtung, die Zirkonoxid (ZrO₂) aufweist und auf die Außenseite des Entladungsgefäßes gegenüber der Bodenfläche 10 aufgebracht wird, erreicht werden, dass sich die Temperatur der Bodenfläche gleichmäßiger erhöht, da sich die beschichteten Bereiche stärker als die beschichtungsfreien Bereiche erwärmen.

Eine solche Beschichtung kann bei allen Ausführungsformen auch im Bereich der Quetschungen 5 auf die Außenseite des Entladungsgefäßes 1 aufgebracht werden, um alternativ oder zusätzlich zu den oben beschriebenen Maßnahmen dazu beizutragen, dass möglichst wenig Lichtbildner-Substanzen - oder andere abgeschiedene Substanzen - in diese Bereiche wandern.

Figur 6 zeigt schließlich einen Längsschnitt durch einen Außenkolben 9, in dem sich eine der erfindungsgemäßen Entladungslampen befindet, sowie die äußeren Anschlüsse 8, über die den Elektroden 3 eine Versorgungsspannung zugeführt wird

Zur Verdeutlichung der mit den erfindungsgemäßen Entladungslampen erzielbaren Vorteile und Eigenschaften sei im folgenden ein Vergleichsbeispiel gegeben:

Ausgegangen sei von einem Standard-Entladungsgefäß mit einer üblichen, das heißt nicht erhöhten Bodenfläche, das ein Volumen von etwa 27 µl aufweist und das eine Gasfüllung mit etwa 300 µg Natrium-/Scandiumiodid mit einem Verhältnis von etwa 70 Gewichts% Natriumiodid zu etwa 30 Gewichts% Scandiumiodid sowie einem Xenon-Druck von etwa 620 mbar (Vordruck im Hilfsvolumen) und 50 µg Zinkiodid (ZnJ₂) enthält. Damit ergibt sich bei einer Brennspannung von etwa 35 V ein Lichtstrom von etwa 2650 lm.

Mit der in den Figuren 2(a) und (b) gezeigten zweiten Ausführungsform, bei der das Volumen des Entladungsraums 2 etwa 20 µl beträgt und bei der die Bodenfläche 10 um maximal etwa 0,5 mm angehoben ist, ergibt sich bei gleicher Gasfüllung eine Brennspannung von etwa 50 V und ein Lichtstrom von etwa 3050 lm.

Verwendet man die in Figur 1 gezeigte erste Ausrührungsform mit gleichem Volumen des Entladungsraums 2 (20 µl) sowie einer um etwa 0,5 mm angehobenen Bodenfläche 10, wobei jedoch die Gasrüllung kein Zinkiodid enthält, ansonsten jedoch den oben beschriebenen Gasfüllungen entspricht, so ergibt sich eine Brennspannung von etwa 42 V und ein Lichtstrom von etwa 3200 lm.

Mit den erfindungsgemäßen Gestaltungen des Entladungsraums 2 wird somit eine erhebliche Steigerung des Lichtstroms sowie eine deutliche Erhöhung der Brennspannung erzielt.

Schließlich soll noch darauf hingewiesen werden, dass das erfindungsgemäße Prinzip, mit dem die Temperatur der kältesten Stelle des Entladungsgefäßes erhöht wird, natürlich auch auf Lampen anwendbar ist, die Quecksilber enthalten und bei denen die mit Quecksilber verbundenen Nachteile für die Umwelt in Kauf genommen werden. In diesem Fall kann durch eine solche Temperaturerhöhung zum Beispiel die Effizienz erhöht bzw. bei gleicher Effizienz die Einspeiseleistung der Lampe vermindert werden.

## Patentansprüche

1. Hochdruckgasentladungslampe mit einem Entladungsgefäß (1), das einen Entladungsraum (2) mit einer Lichtbildner-Substanz und einer in der Betriebsstellung der Lampe unteren Bodenfläche (10) umschließt, die einen ersten erhöhten Bereich (11) sowie mindestens einen zweiten Bereich (12) aufweist, wobei
- der Abstand des ersten Bereiches (11) von einer im Betrieb der Lampe ausgebildeten Bogenentladung (6) so bemessen ist, dass die auf dem ersten Bereich (11) angesammelte Lichtbildner-Substanz nach dem Einschalten der Lampe durch Erwärmung in ausreichender Menge in den gasförmigen Zustand übergeht, und wobei
- der zweite Bereich (12) in der Weise gestaltet ist, dass er als Sammelbereich für die durch die beim Einschalten der Lampe bewirkte Erwärmung wandernde Lichtbildner-Substanz wirkt.

2. Hochdruckgasentladungslampe nach Anspruch 1,
mit Quetschungen (5), die symmetrisch zu dem Entladungsgefäß (1) angeordnet sind.

3. Hochdruckgasentladungslampe nach Anspruch 1,
bei der das Entladungsgefäß (1) in der Weise rotationssymmetrisch ausgebildet ist, dass sich der erste Bereich (11) entlang des gesamten Innenumfangs des Entladungsraums (2) erstreckt.

4. Hochdruckgasentladungslampe nach Anspruch 1,
die eine quecksilberfreie Gasfüllung aufweist.

5. Hochdruckgasentladungslampe nach Anspruch 4,
die in der Gasfüllung einen Spannungsgradientenbildner in Form eines oder mehrerer Metall-Halogenide aufweist.

6. Hochdruckgasentladungslampe nach Anspruch 5,
bei der der Spannungsgradientenbildner Zinkiodid aufweist.

7. Hochdruckgasentladungslampe nach Anspruch 4,
bei der die Gasfüllung zur Erhöhung des Gasdrucks und zur Steigerung der Lampeneffizienz zusätzliche Mengen von Edelgasen wie Xenon aufweist.

8. Hochdruckgasentladungslampe nach Anspruch 1,
bei der die dem eisten Bereich (11) gegenüberliegende Außenwand des Entladungsgefäßes (1) mit einer Beschichtung versehen ist, die Zirkonoxid (ZrO2) aufweist.

9. Hochdruckgasentladungslampe nach Anspruch 1,
bei der die Außenwand des Entladungsgefäßes (1) im Bereich der Eintrittsstellen (7) der Elektroden (3) und /oder der Quetschungen (5) mit einer Beschichtung versehen ist, die Zirkonoxid (ZrO2) aufweist.

10. Beleuchtungseinheit insbesondere für Fahrzeug-Scheinwerfer mit einer Hochdruckgasentladungslampe nach einem der vorhergehenden Ansprüche.
